# EUROPEAN PATENT SPECIFICATION

(11) **EP 1 266 903 B1**
(45) Date of publication and mention of the grant of the patent: **29.09.2004**
(21) Application number: 01305206.3
(22) Date of filing: 15.06.2001
(51) Int. Cl.: C07F 7/14, C07F 7/18

(54) **Method of preparing an organosilicon compound**
Verfahren zur Herstellung einer Organosiliziumverbindung
Procédé pour la préparation des composés organosiliciques

(43) Date of publication of application: 18.12.2002
(73) Proprietor: DOW CORNING ASIA, Ltd., Tokyo 100-0005 (JP)
(72) Inventor: Tachikawa, Mamoru, Dow Corning Asia, Ltd, Chiyoda-ku, Tokyo 100-0005 (JP); Takei, Kasumi, Dow Corning Asia, Ltd, Chiyoda-ku, Tokyo 100-0005 (JP)
(74) Representative: Kyle, Diana

(56) References cited:
- US-A- 5 449 802

## Description

The present invention relates to the selective production of specific organosilicon compounds which are useful as silane coupling agents, as starting materials for various silicon compounds, are useful as various additives, and as starting materials for various organosilicon polymers.

Hydrosilylation involving the use of platinum catalysts is a particularly important technique in the silicone industry, particularly in the production of organic modified silicones and silane coupling agents. Many attempts have been made in the past to improve the selectivity for the product structure or the hydrosilylation reaction rate in this process.

The following are examples of improvements in hydrosilylation reaction rates.

US Patent No. 5,359,111 describes a process where the hydrosilylation reaction is carried out in an oxygen gas atmosphere.

US Patent No. 5,449,802 describes a process where the hydrosilylation reaction is carried out in the presence of acetylene alcohol or a derivative thereof.

US Patent No. 5,481,016 describes a process where the hydrosilylation reaction is carried out in the presence of an alcohol having a tertiary structure or a derivative thereof.

US Patent No. 5,486,637 describes a process where the hydrosilylation reaction is carried out in the presence of alcohol having an unsaturated structure and a branched structure (tertiary or secondary) or a derivative thereof.

*Chem. Eur. J.* 1998, 4. No. 10, p. 2008-2017 describes a process where the hydrosilylation reaction is carried out in the presence of a naphthyl ketone.

Japanese Unexamined Patent Application (Kokai) 11-80167 describes a process where the hydrosilylation reaction is carried out in the presence of a sulfur compound.

Methods for bringing about a hydrosilylation reaction in the presence of a platinum catalyst and various additives have been proposed in order to improve the selectivity for certain products during hydrosilylation. The following are examples of reactions for the hydrosilylation of allyl chlorides with hydrochlorosilanes in the presence of a platinum catalyst. Japanese Unexamined Patent Application (Kokai) 9-157276 and Japanese Unexamined Patent Application (Kokai) 55-145693: phosphines are used as additives. Japanese Unexamined Patent Application (Kokai) 9-192494: tertiary amines with alkyl or aralkyl groups as substituents are used as additives. Japanese Unexamined Patent Application (Kokai) 10-72474: amino alcohol derivatives are used as additives.

US Patent No. 5,563,287 and US Patent No. 5,567,848 disclose methods featuring the use of cycloalkadiene compounds in the hydrosilylation of alkyne-based hydrocarbons.

Although the prior art discloses methods for improving the yield of the target product in specific systems, no method widely applicable to hydrosilylation reactions has yet been established for satisfactorily increasing the proportion of the target product over the proportion of by-products.

An object of the present invention is to allow target products (β-hydrosilylated products) having a structure in which silicon atoms are bonded to the terminal carbon atoms of unsaturated groups, which are the reactive groups of unsaturated compounds, to be produced more efficiently than in the past compared to by-products (substituted reaction products produced in the case of allyl chlorides and the like, or α-hydrosilylated products produced in the case of styrenes and the like) during hydrosilylation reactions in which the aforementioned unsaturated compounds having terminal unsaturated groups and silicon compounds having hydrogen atoms directly bonded to silicon atoms are allowed to react in the presence of a platinum catalyst.

A method of preparing an organosilicon compound comprising effecting a hydrosilylation reaction between (a) unsaturated compounds with terminal unsaturated groups and (b) silane compounds described by formula HSiR⁰ₘW₃₋ₘ, where W is a C₁ to C₆ alkoxy group, C₆ to C₁₀ aryloxy group, and halogen atoms, R⁰ is an organic group, and m is 0, 1, or 2 in the presence of (c) a platinum catalyst and (d) an auxiliary catalyst selected from the group consisting of (1) silyl esters of acids derived from oxo acids of sulfur; (2) amide compounds having N-Si bonds; (3) urea compounds; (4) silyl esters of carbamic acid; (5) phosphoric acid compounds; and (6) cyclic compounds selected from the group consisting of (i) hydroxypyridine compounds, (ii) 8-hydroxyquinoline compounds, (iii) oxazolidinone compounds, and (iv) N-hydroxysuccinimide compounds.

The present invention is a method of preparing an organosilicon compound comprising effecting a hydrosilylation reaction between (a) unsaturated compounds with terminal unsaturated groups and (b) silane compounds described by formula HSiR⁰ₘW₃₋ₘ, where W is a C₁ to C₆ alkoxy group, C₆ to C₁₀ aryloxy group, and halogen atoms, R⁰ is an organic group, and m is 0, 1, or 2 in the presence of (c) a platinum catalyst and (d) an auxiliary catalyst selected from the group consisting of
(1) silyl esters of acids derived from oxo acids of sulfur; (2) amide compounds having N-Si bonds; (3) urea compounds; (4) silyl esters of carbamic acid; (5) phosphoric acid compounds; and (6) cyclic compounds described by the following formulas selected from the group consisting of (i) hydroxypyridine compounds, (ii) 8-hydroxyquinoline compounds, (iii) oxazolidinone compounds, and (iv) N-hydroxysuccinimide compounds: 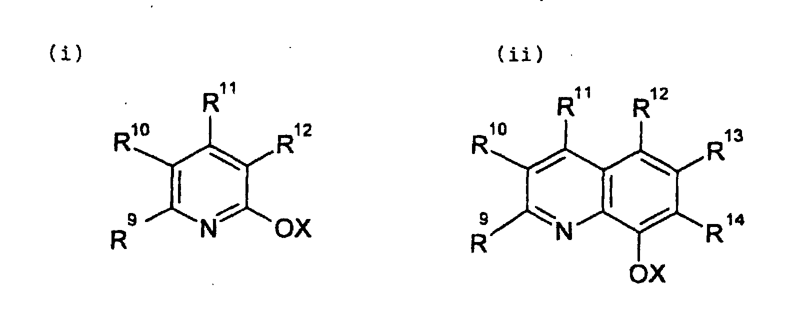 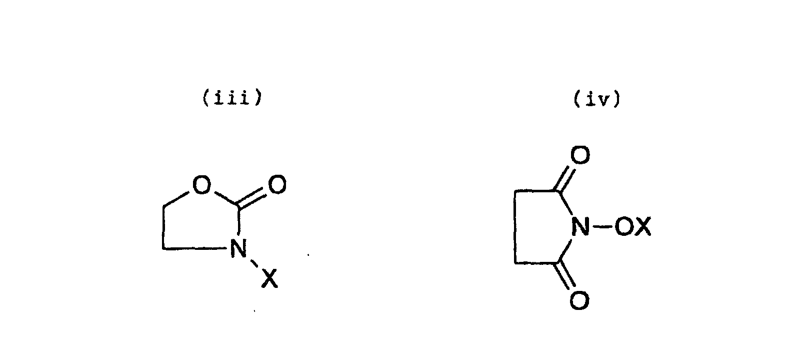 where R⁹, R¹⁰, R¹¹, R¹², R¹³, and R¹⁴ arc each independently selected from the group consisting of hydrogen atoms, halogen atoms, C₁ to C₁₀ alkyl groups, C₆ to C₁₀ aryl groups, C₁ to C₁₀ alkoxy groups, and groups described by R²₃Si-, where each R² is independently selected from the group consisting of C₁ to C₁₀ hydrocarbon groups, C₁ to C₁₀ alkoxy groups, chlorine atoms, and hydrogen atoms with a maximum of 2 hydrogen atoms present; and X is a hydrogen atom or a group described by R²₃Si-, where R² is the same as described above.

The aforementioned objectives are successfully achieved in the present invention by ensuring the presence of certain compounds during the aforementioned hydrosilylation reaction. The aforementioned certain compounds in the present invention are used as auxiliary catalysts during hydrosilylation reactions. Specifically, compounds are selected from among (d) (1) through (d)(6). Herein the compounds (d) are sometimes referred to as "substances acting as auxiliary catalysts" or "auxiliary catalyst". These auxiliary catalyst allow the target product to be produced preferentially over the aforementioned by-products in hydrosilylation reactions of (a) unsaturated compounds with terminal unsaturated groups in the range described below and (b) silane compounds represented by HSiR⁰ₘW₃₋ₘ, where each W is selected from the group consisting of C₁ to C₆ alkoxy groups, C₆ to C₁₀ aryloxy groups, and halogen atoms selected from F, Cl, Br, and I, R⁰ is an organic group, and m is 0, 1, or 2, in the presence of (c) a platinum catalyst.

Depending on the type of system to which it is applied, the present method of hydrosilylation can also dramatically improve the yield of the target product and/or increase the reaction rate in addition to improving selectivity.

The components (a), (b), (c), and (d) used in the present method are described below.

The aforementioned (a) unsaturated compounds with terminal unsaturated groups refer to compounds having reactive carbon-carbon double bonds or carbon-carbon triple bonds at the terminals of the molecule. They are typically selected from among (1) through (8) below. These may include atoms selected from O, N, F, Cl, Br, Si, or S in addition to carbon atoms and hydrogen atoms in the structure, provided that the reactivity with the silane compound (b) above is not dramatically reduced. Component (a) can be, for example,
(1) styrene or styrene derivatives;
(2) vinylsilane compounds;
(3) siloxane compounds having vinyl groups directly bonded to silicon atoms;
(4) epoxy functional olefins;
(5) diene compounds:
(6) allyl compounds represented by CH₂=CHCH₂X, where X is selected from the group consisting of a halogen atom i.e. F, Cl, Br, I, an alkoxy group, and acyloxy group;
(7) olefin compounds having terminal vinyl groups; and
(8) acetylene-based compounds.

Examples of (1) styrenes or styrene derivatives include styrene-based hydrocarbon compounds such as styrene, p-methylstyrene, p-ethylstyrene, p-phenylstyrene, and divinylbenzene; halogen-containing styrene such as p-fluorostyrene, p-chlorostyrene, p-bromostyrene, p-iodostyrene, and p- and m-(chloromethyl)styrene; oxygen-containing or silicon-containing styrene derivatives such as p-methoxystyrene and p-trimethylsilylstyrene; nitrogen-containing styrene derivatives such as p-(diphenylamino)styrene, p-(ditolylamino)styrene, p-(dixylylamino)styrene, and bis(4-vinylphenyl) (4-methylphenyl)amine.

Examples of (2) vinylsilane compounds and (3) siloxane compounds having vinyl groups directly bonded to silicon atoms include vinyltrialkylsilanes such as vinyltrimethylsilane, vinyltriethylsilane, vinyltripropylsilane, and vinyldimethylethylsilane; vinylalkoxysilanes such as vinyltrimethoxysilane, vinyltriethoxysilane, vinylmethyldiethoxysilane, and vinyldimethylmethoxysilane; vinyl functional siloxanes such as 1,3-divinyltetramethyldisiloxane, α,ω-divinylpolydimethylsiloxane, and 1,3,5,7-tetravinyl-1,3,5,7-tetramethylcyclotetrasiloxane; and vinyl functional silazanes (these can be viewed as a type of vinylsilane) such as 1,3-divinyltetramethyldisilazane and 1,3,5,7-tetravinyl-1,3,5,7-tetramethylcyclotetrasilazane.

Examples of (4) epoxy functional olefins include allyl glycidyl ethers and vinyl cyclohexene oxides. Examples of (5) diene compounds include 1,3-butadiene, isoprene, 1,5-hexadiene, and 1,3-octadiene. Examples of (6) allyl compounds described by CH₂=CHCH₂X include allyl chlorides, allyl acetates, and allyl methacrylates.

Olefin compounds (7) having terminal vinyl groups may be straight-chained or branched. They may have aromatic hydrocarbon groups as substituents. Examples of straight-chained terminal unsaturated olefin compounds include ethylene, propylene, butene-1, hexene-1, octene-1, and octadecene-1. Examples of branched olefin compounds with terminal unsaturated groups include isobutylene, 3-methylbutene-1,3,5-dimethylhexene-1, and 4-ethyloctene-1. Examples of olefin compounds which contain atoms selected from O, N, F, Cl, Br, Si, and S include oxygen-containing allyl compounds such as allyl methacrylates; amine compounds having vinyl groups such as N-vinylcarbazoles; olefin halogen compounds such as 4-chlorobutene-1 and 6-bromohexene-1; and silicon functional olefin compounds such as allyloxytrimethylsilane.

Acetylene-based compounds (8) have terminal ethynyl groups (CH≡C-). These may have aromatic hydrocarbon groups as substituents. Examples of acetylene-based compounds with terminal ethynyl groups (CH≡C-) include acetylene, propyne, butyne-1, hexyne-1, and octyne-1. Examples of acetylene-based compounds having aromatic hydrocarbon groups include phenylacetylene, 3-phenylpropyne, and 4-phenylbutyne-1. Examples of acetylene-based compounds which contain atoms selected from O, N, F, Cl, Br, Si, and S include oxygen-containing acetylene-based compounds such as 3-methyl-1-butyn-3-ol and 3-phenyl-1-butyn-3-ol; silicon-containing acetylene-based compounds such as O-trimethylsilyl compounds of 3-methyl-1-butyn-3-ol (HC≡C-CH(CH₃)-O-Si(CH₃)₃) and O-trimethylsilyl compounds of 3-phenyl-1-butyn-3-ol (HC≡C-CH(C₆H₅)-O-Si(CH₃)₃); and halogen-containing acetylene-based compounds such as propalgyl chloride and propalgyl bromide.

Silane compounds (b) described by HSiR⁰ₘW₃₋ₘ, where W is selected from the group consisting of C₁ to C₆ alkoxy groups, C₆ to C₁₀ aryloxy groups, and halogen atoms selected from F, Cl, Br, and I, R⁰ is an organic group, and m is 0, 1, or 2 are described below.

Examples of R⁰ include alkyl, alkenyl, aryl, haloalkyl, and haloaryl groups. Specific examples of R⁰ include:
(1) C₁ to C₁₈ alkyls such as methyl, ethyl, n-propyl, isopropyl, n-butyl, t-butyl, n-pentyl, cyclohexyl, n-octyl, undecyl, and heptadecyl groups;
(2) C₂ to C₁₈ alkenyl groups such as propenyl groups and butenyl groups;
(3) C₆ to C₁₈ aryl groups such as phenyl;
(4) C₁ to C₁₈ haloalkyl groups (the halogen atom may be F, Cl, or Br) such as chloromethyl, fluoromethyl, and 3,3,3-trifluoropropyl groups; and
(5) C₆ to C₁₈ haloaryl groups (the halogen atom may be F, Cl, or Br) such as p-chlorophenyl.

Examples where W is a C₁ to C₆ alkoxy group include methoxy, ethoxy, n-propoxy, i-propoxy, n-butoxy, n-pentyloxy, n-hexyloxy, cyclopentyloxy, cyclohexyloxy, 2-methoxyethoxy, and 2-ethoxyethoxy groups. Examples where W is a C₆ to C₁₀ aryloxy group include phenoxy. Examples where W is a halogen atom include those in which the halogen is selected from F, Cl, Br, or I, and preferably Cl or F.

A carbon number beyond the range stipulated here will result in reactivity that is too low for practical purposes for component (b). The following are preferred among the silane compounds of (b) for their reactivity: trimethoxysilane, methyldimethoxysilane, dimethylmethoxysilane, triethoxysilane, methyldiethoxysilane, dimethylethoxysilane, dimethylchlorosilane, methyldichlorosilane, and trichlorosilane.

The auxiliary catalyst in the present invention is a compound (d) which is co-present with the aforementioned (c) platinum catalyst during the hydrosilylation reaction so as to allow the target product (β-hydrosilylated products) having a structure in which silicon atoms are bonded to the terminal carbon atoms of unsaturated groups, which are the reactive groups of (a) unsaturated compounds having unsaturated terminal groups, to be produced more efficiently compared to the by-products.

The substance acting as an auxiliary catalyst comprising component (d) is selected from (1) through (6) below: (1) silyl esters of acids derived from oxo acids of sulfur; (2) amide compounds having N-Si bonds; (3) urea compounds; (4) silyl esters of carbamic acid; (5) phosphoric acid compounds; and (6) cyclic compounds represented by the following formulas, selected from (i) hydroxypyridine compounds, (ii) 8-hydroxyquinoline compounds, (iii) oxazolidinone compounds, and (iv) N-hydroxysuccinimide compounds: 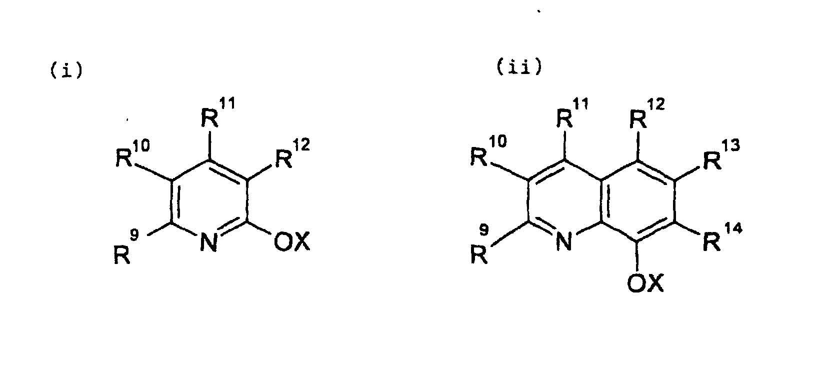 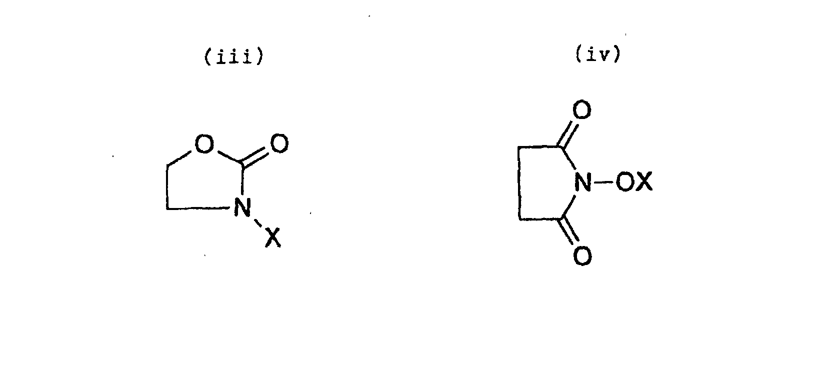 where R⁹, R¹⁰, R¹¹, R¹², R¹³, and R¹⁴ are each independently selected from the group consisting of hydrogen atoms, halogen atoms selected from F, Cl, Br, and I, C₁ to C₁₀ alkyl groups, C₆ to C₁₀ aryl groups, C₁ to C₁₀ alkoxy groups, and groups described by R²₃Si- , where each R² is independently selected from the group consisting of C₁ to C₁₀ hydrocarbon groups, C₁ to C₁₀ alkoxy groups, chlorine atoms, and hydrogen atoms with a maximum of 2 hydrogen atoms present; and X is hydrogen or a group described by R²₃Si-, where R² is the same as described above.

Silyl esters of acids derived from oxo acids of sulfur in (d) (1) refer to silyl esters of acids derived from oxo acids of sulfur such as sulfonic acid and sulfuric acid, for example, alkylsulfonic acids, haloalkylsulfonic acids, arylsulfonic acids, haloarylsulfonic acids, halosulfuric acids, sulfamic acid, sulfuric acid monoesters, and sulfonic acids with siloxy groups directly bonded to sulfur atoms, and are not particularly limited, provided that these conditions are met. Preferably (d)(1) is compounds described by formula: R¹S(=O)₂OSiR²¹₃, where R¹ is selected from the group consisting of C₁ to C₁₀ alkyl groups, C₆ to C₁₈ aryl groups, groups described by R¹⁸₂N-, where each R¹⁸ is independently selected from the group consisting of C₁ to C₁₀ alkyl groups, C₆ to C₁₈ aryl groups, and hydrogen atoms with a maximum of 1 hydrogen atom present, C₁ to C₁₀ haloalkyl groups where the halogen atom is selected from F, Cl, Br, or I; (henceforth, halogen atoms are selected from F, Cl, Br, and I where "haloalkyls" are referred to), C₆ to C₁₈ haloaryl groups (halogen atoms are selected from F, Cl, Br, and I; henceforth, halogen atoms are selected from F, Cl, Br, or I where "haloaryls" are referred to), halogen atoms (selected from F, Cl, Br, and I), C₁ to C₁₀ alkoxy groups, and siloxy groups described by R³⁰₃SiO-, where each R³⁰ is an independently selected C₁ to C₆ alkyl groups; and each R²¹ is independently selected from the group consisting of C₁ to C₁₀ hydrocarbon groups, C₁ to C₁₀ alkoxy groups, chlorine atoms, hydrogen atoms with a maximum of 2 hydrogen atoms present, and R¹S(=O)₂O-, where R¹ is the same as described above.

Examples of Silyl esters of acids derived from oxo acids of sulfur in (d) (1) include silyl esters of alkylsulfonic acids such as trimethylsilyl esters of methanesulfonic acid, silyl esters of arylsulfonic acids such as trimethylsilyl esters of benzenesulfonic acid, silyl esters of halosulfuric acid such as trimethylsilyl esters of chlorosulfuric acid ((CH₂)₃SiOSO₂Cl), diemethylsilyl esters of chlorosulfuric acid ((CH₃)₂HSiOSO₂Cl), chloromethylsilyl esters of chlorosulfuric acid (Cl(CH₃)HSiOSO₂Cl), trimethylsilyl esters of chlorosulfuric acid ((CH₃)₃SiOSO₂F), dimethylsilyl esters of fluorosulfuric acid ((CH₃)₂HSiOSO₂F), and fluoromethylsilyl esters of fluorosulfuric acid (F(CH₃)HSiOSO₂F). Preferred examples are silyl esters of alkylsulfonic acids and silyl esters of arylsulfonic acids.

The amide compounds with N-Si bonds in (d)(2) have the amide group -C(=O)-NR²⁶R²⁷, where at least one of R²⁶ and R²⁷ consists of a silyl group and substituents that are not silyl groups are not particularly limited; examples include hydrogen atoms or hydrocarbon groups and are not particularly limited provided that these conditions are met. Component (d)(2) is preferably compounds described by formula: R³C(=O)NR⁴SiR²²₃, where R³ is selected from the group consisting of C₁ to C₁₀ alkyl groups, C₆ to C₁₈ aryl groups, C₁ to C₁₀ haloalkyl groups, and C₆ to C₁₈ haloaryl groups; R⁴ is a C₁ to C₁₀ hydrocarbon group or hydrogen atom; and each R²² is independently selected from the group consisting of C₁ to C₁₀ hydrocarbon groups, C₁ to C₁₀ alkoxy groups, chlorine atoms, hydrogen atoms with a maximum of 2 hydrogen atoms present, and R³C (=O)NR⁴-, where R³ and R⁴ are the same as described above.

Examples of component (d)(2) include N-trimethylsilylformamide (HC(=O)N(H)SiMe₃) (Me is a methyl group, same below), N-dimethylsilylacetamide (CH₃C(=O)N(H)SiMe₂H), N-trimethylsilylpropionamide (CH₃CH₂C(=O)N(H)SiMe₃), N-dimethylsilylbenzamide (PhC(=O)N(H)SiMe₂H) (Ph is a phenyl group, same below), N-trimethylsilyltrifluoroacetamide (CF₃C(=O)N(H)SiMe₃), N-trimethylsilyl-N-methyl formamide (HC(=O)N(Me)SiMe₃), N-dimethylsilyl-N-methylacetamide (CH₃C(=O)N(Me)SiMe₂H), N-trimethylsilyl-N-ethylpropionamide (CH₃CH₂C(=O)N(Et)SiMe₃) (Et is an ethyl group, same below), N-trimethylsilyl-N-methylbenzamide (PhC(=O)N(Me)SiMe₃), N-dimethylsilyl-N-ethyltrifluoroacetamide (CF₃C(=O)N(Et)SiMe₂H), N,N-bis(trimethylsilyl)formamide (HC(=O)N(SiMe₃)₂), and N,N-bis(dimethylsilyl)acetamide (CH₃C(=O)N(SiMe₂H)₂). N-dialkylsilylacetamides and N-dialkylsilyl-N-alkylacetamides are preferred.

The urea compounds in (d) (3) have a >N-C(=O)-N< structure, and are not particularly limited provided that this condition is met. The urea compounds are preferably compounds described by formula: R⁵R⁶NC (=O)NR⁴X¹, where R⁵ and R⁶ are each independently selected from the group consisting of hydrogen atoms, C₁ to C₁₀ alkyl groups, C₆ to C₁₈ aryl groups, C₁ to C₁₀ haloalkyl groups, C₆ to C₁₈ haloaryl groups, and silyl groups represented by R₃Si-, where each R is an independently selected C₁ to C₃ alkyl group or hydrogen atom with a maximum of 2 hydrogen atoms present, R⁴ is the same as described above; X¹ is selected from the group consisting of R²³₃Si- and hydrogen atoms; where each R²³ is independently selected from the group consisting of C₁ to C₁₀ hydrocarbon groups, C₁ to C₁₀ alkoxy groups, chlorine atoms, hydrogen atoms with a maximum of 2 hydrogen atoms present, and R⁵R⁶NC (=O)-, where R⁵ and R-⁶ are as described above.

Examples of compounds of component (d)(3) include urea, N-methylurea (H₂NC(=O)N(H)CH₃), N,N-dimethylurea (H₂NC(=O)N(CH₃)₂)), N-trimethylsilylurea (H₂NC(=O)N(H)SiMe₃), N,N'-bis(trimethylsilyl)urea (Me₃Si(H)NC(=O)N(H)SiMe₃), N,N'-dimethyl-N,N'-bis(trimethylsilyl)urea (Me₃Si(CH₃)NC(=O)N(CH₃)SiMe₃), and N,N'-bis(dimethylsilyl)urea (Me₂HSi(H)NC(=O)N(H)SiMe₃H). Urea or N,N'-bis(trialkylsilyl)ureas are preferred.

The silyl esters of carbamic acids in (d)(4) are silyl esters of well-known carbamic acids (those with an >NC(=O)OH structure), and are not particularly limited, provided that this condition is met. The silyl esters of carbamic acids are preferably compounds described by formula: R⁷R⁸NC(=O)OSiR²⁴₃ , where R⁷ and R⁸ are each independently selected from the group consisting of C₁ to C₁₀ alkyl groups, C₆ to C₁₈ aryl groups, and hydrogen atoms with a maximum of 1 hydrogen atom present; and each R²⁴ is independently selected from the group consisting of C₁ to C₁₀ hydrocarbon groups, C₁ to C₁₀ alkoxy groups, chlorine atoms, hydrogen atoms with a maximum of 2 hydrogen atoms present, and R⁷R⁸NC (=O)-, where R⁷ and R⁸ are the same as above.

Examples of compounds of component (d)(4) include dimethylsilyl N-methylcarbamate (CH₂(H)C(=O)OSiMe₂H), trimethylsilyl N-ethylcarbamate (Et(H)C(=O)OSiMe₃), dimethylsilyl N-phenylcarbamate (Ph(H)C(=O)OSiMe₃H), dimethylsilyl N,N-dimethylcarbamate ((CH₃)₂C(=O)OSiMe₂H), and trimethylsilyl N,N-diethylcarbamate (Et₂C(=O)OSiMe₃). Trialkylsilyl N,N-dialkylcarbamates are preferred.

The phosphoric acid compounds of (d) (5) are not particularly limited, provided that they are compounds derived from ortho-phosphoric acid. Phosphoric acid compounds are preferably compounds described by formula: (R¹⁶O)₃P(=O) , where each R¹⁶ is independently selected from the group consisting of hydrogen atoms with a maximum of 2 hydrogen atoms present, C₁ to C₁₀ alkyl groups, C₆ to C₁₈ aryl groups, C₁ to C₁₀ haloalkyl groups, C₆ to C₁₈ haloaryl groups, and silyl groups described by R²⁵₃Si-, where each R²⁵ is independently selected from the group consisting of C₁ to C₁₀ hydrocarbon groups, C₁ to C₁₀ alkoxy groups, chlorine atoms, hydrogen atoms with a maximum of 2 hydrogen atoms present), and (R¹⁵O)₂P(=O)O- , where each R¹⁵ is independently selected from the group consisting of hydrogen atoms with a maximum of 2 hydrogen atoms present, C₁ to C₁₀ alkyl groups, C₆ to C₁₈ aryl groups, C₁ to C₁₀ haloalkyl groups, and C₆ to C₁₈ haloaryl groups with a maximum of 2 silyl groups present.

Examples of compounds of component (d)(5) include triethyl phosphate ((EtO)₃P(=O)), trimethyl phosphate ((MeO)₃P(=O)), tris(butoxyethyl) phosphate ((BuOCH₂CH₂O)₃P(=O)) (Bu is a butyl group, same below), bis(2-ethylhexyl) hydrogen phosphate (C₄H₉CH(C₂H₅)CH₂O)₂P(=O)OH), and tris(4-t-butylphenyl) phosphate ((4-tBu-Ph-O)₃PO). Trialkyl phosphates are preferred.

Examples of cyclic compounds selected from the (i) hydroxypyridine compounds, (ii) 8-hydroxyquinoline compounds, (iii) oxazolidinone compounds, and (iv) N-hydroxysuccinimide compounds of (d)(6) include 2-hydroxypyridine, 8-hydroxyquinoline, oxazolidinone, 3-trimethylsilyl-2-oxazolidinone, and N-hydroxysuccinimide. The hydrogen atom of-the hydroxy groups in such compounds may be substituted with silyl groups such as trimethylsilyl, dimethylsilyl, methylsilyl, trimethoxysilyl, dimethoxysilyl, methylchlorosilyl, and dichlorosilyl groups.

In the present invention, a substance acting as an auxiliary catalyst selected from (d)(1) through (6) above is present in the hydrosilylation reaction mixture. The co-presence of this substance acting as an auxiliary catalyst with the reaction substrate (components (a) and (b)) and the platinum catalyst of component (c) usually promotes the hydrosilylation reaction.

However, a substance producing the substance that acts as the auxiliary catalyst through a chemical reaction (henceforth referred to as "substance producing a substance that acts as an auxiliary catalyst" or "*in situ* produced auxiliary catalyst") can be used in the hydrosilylation reaction mixture as an alternative to the aforementioned substance acting as an auxiliary catalyst.

Specific examples include methods in which a substance producing a substance that acts as an auxiliary catalyst is present with the reaction substrate and platinum catalyst so that the substance acting as an auxiliary catalyst is produced by a chemical reaction in the system from the substance producing the substance that acts as an auxiliary catalyst, thereby promoting the hydrosilylation reaction, and methods in which a substance producing a substance that acts as an auxiliary catalyst is allowed to be present with part or all of the reaction substrate to similarly produce a substance acting as an auxiliary catalyst, and other components needed for the hydrosilylation reaction are subsequently added to promote the reaction. The present invention includes such methods.

The aforementioned substance producing a substance that acts as an auxiliary catalyst is not particularly limited, provided that it produces a substance acting as an auxiliary catalyst selected from (d)(1) through (d)(6) above.

Typical examples of substances producing a substance that acts as an auxiliary catalyst include metal salt compounds that produce the substances acting as auxiliary catalysts selected from (d)(1) through (d)(6) in the hydrosilylation reaction mixture. Such metal salt compounds produce substances acting as auxiliary catalysts upon reaction with chlorosilanes, particularly when component (b) is a chlorosilane represented by R₃₋ₙClₙSiH, where R is a C₁ to C₃ alkyl group, and n is an integer of 1 to 3. Examples of such metal salt compounds include metal salts of acids derived from oxo acids of sulfur, metal salts of amide compounds having NH groups, metal salts of carbamic acids, and metal salts of phosphoric acid compounds having OH groups. Alkali metals or alkaline earth metals can be used, for examples, as the metals of such metal salts. Examples include Na, K, and Li.

Specific examples of metal salts of acids derived from oxo acids of sulfur include sodium methanesulfonate, sodium 1-octanesulfonate (C₈H₁₇-S(=O)₂ONa), sodium cyclohexylsulfamate (C₅H₉-NH-S(=O)₂ONa), sodium dodecylsulfate (CH₃(CH₂)₁₀CH₂OSO₃Na), and sodium benzenesulfonate. These produce silyl esters of acids derived from oxo acids of sulfur upon reaction with the aforementioned chlorosilanes. Dimethyl chlorosilane ((CH₃)₂ClSiH) is an example of such a chlorosilane.

Other examples of metal salts include potassium salts of N-methylacetamide (CH₃C(=O)N(CH₃)K) and monolithium salts of diethylphosphate esters ((C₂H₅O)₂P(=O)OLi). Amide compounds with N-Si bonds and phosphate compounds are similarly produced upon reaction with chlorosilanes.

The substance acting as an auxiliary catalyst (component (d)) can be used within the range of between 0.01 and 20 wt% relative to the total amount of the reaction substrate (components (a) and (b)). An amount lower than this range will generally result in lower effects, while an amount greater than this range can cause problems in terms of the cost of the substance acting as the auxiliary catalyst, difficulties in removing the substance acting as the auxiliary catalyst, side reactions, and so forth, and thus will not always necessarily provide desirable results. When the effects of the substance acting as the auxiliary catalyst improves reaction selectivity at the expense of the reaction rate, the amount that is added must be limited in order to avoid unduly lowering the reaction rate. The amount added should generally range from 0.05 to 10 wt% to ensure satisfactory results and for economic reasons.

The ratio in which the reaction substrate components (a) and (b) are blended is not particularly restricted, and is selected as befits the specific purpose, such as the yield or amount obtained when implementing the present invention.

The amount in which the reaction catalyst component (c) is used is not particularly limited, provided that the desired hardening properties are obtained. However, for economic reasons, the catalyst is generally used in the range of 10⁻⁸ mol to 10⁻³ mol platinum per mol silane compound component (b).

There is no essential need to use a solvent in the present invention, but hydrocarbon compounds can be used as reaction solvents or catalyst component solvents to dissolve the substrate as well as to facilitate the addition of the catalyst components and control the temperature of the reaction system. Examples of solvents which are ideal for such purposes include saturated or unsaturated hydrocarbon compounds such as hexane, cyclohexane, heptane, octane, dodecane, benzene, toluene, xylene, and dodecylbenzene; and halohydrocarbon compounds such as chloroform, methylene chloride, chlorobenzene, and ortho-dichlorobenzene.

Specific examples of (c) platinum catalysts which may be used as the hydrosilation catalyst in the present invention include, but are not limited to, olefin complexes of 0-valent platinum, vinylsiloxane complexes of 0-valent platinum, olefin complex-halogen compounds of divalent platinum, chloroplatinic acid, carbon-supported platinum, and silica-supported platinum, as well as others common industrially used types.

The hydrosilylation reaction in the present invention is preferably carried out at a temperature between 10 and 250°C.

The method for producing organosilicon compounds through the hydrosilylation of unsaturated compounds in the present invention is applicable to hydrosilylation reactions in which the reaction is brought about between a wide range of unsaturated compounds and silicon compounds with hydrogen atoms directly bonded to silicon atoms in the presence of a platinum catalyst. The advantage is that the product (β-hydrosilylated product or terminal hydrosilylated product) comprising hydrosilylated terminal carbon atoms (β position carbon atoms) in the unsaturated groups can be produced preferentially (selectively) over by-products.

As used herein, by-products mean materials comprising hydrosilylated α-position carbon atoms in unsaturated groups (α-hydrosilylated products) or materials that are produced by reactions (generally substitution reactions) other than hydrosilylation. In addition to the selectivity for products, the yield can be improved and the reaction rate can be dramatically increased, depending on the type of reaction system to which the present invention is applied.

### Examples

Examples and comparative examples are given below to illustrate the invention in further detail, but the present invention is not limited to these examples alone.

Products in the following examples were analyzed through comparison with standard samples using gas chromatography and gas chromatographic mass analysis. The conversion rate indicates the reaction rate relative to the olefin starting material used, and the yield similarly indicates the proportion of product produced relative to the amount of olefin starting material used.

The N-dimethylsilyl-N-methylacetamide used in the examples was synthesized from dimethylchlorosilane and N-methylacetamide. Commercially available additives, hydridohalosilane compounds, and unsaturated compounds were otherwise used.

Example 1. Reaction between styrene and triethoxysilane with platinum catalyst in the presence of trimethylsilyl methanesulfonate. 356 mg Styrene and 562 mg triethoxysilane were introduced into a glass tube, and 25 mg of trimethylsilyl methanesulfonate ((CH₃)₃SiOSO₂CH₃) were added using a microsyringe. 0.005 ml (4.3 mg) Of a toluene solution of a 0-valent platinum complex of divinyltetramethyldisiloxane (0.04 wt% platinum content) was added. The tube was sealed with Teflon tape and a rubber septum and placed in a 80°C oil bath and heated for 2 hours. After cooling, the tube contents were analyzed by gas chromatography, revealing a styrene conversion of about 10% and a hydrosilylated product yield of 9.5%. The ratio between the terminal hydrosilylated product (phenethyl triethoxysilane) and the interior hydrosilylated product (α-(triethoxysilyl)ethylbenzene) was 53:1.

Example 2. Reaction between styrene and triethoxysilane with platinum catalyst in the presence of trimethylsilyl benzenesulfonate. 356 mg Styrene and 562 mg triethoxysilane were introduced into a glass tube, and 10 mg of trimethylsilyl benzenesulfonate ((CH₃)₃SiOSO₂C₆H₅) were added using a microsyringc. 0.005 ml (4.3 mg) Of a toluene solution of a 0-valent platinum complex of divinyltetramethyldisiloxane (0.04 wt% platinum content) was added. The tube was sealed with Teflon tape and a rubber septum and placed in a 80°C oil bath where it was heated for 2 hours. After cooling, the tube contents were analyzed by gas chromatography revealing a styrene conversion of about 8.5% and a hydrosilylated product yield of 8.4%. The ratio between the terminal hydrosilylated product (phenethyl triethoxysilane) and the interior hydrosilylated product (α-(triethoxysilyl)ethylbenzene) was 19.2:1.

Example 3. Reaction between styrene and triethoxysilane with platinum catalyst in the presence of 2-hydroxypyridine. 353 mg Styrene and 557 mg triethoxysilane were introduced into a glass tube, and 11.3 mg of 2-hydroxypyridine was added. 0.005 ml (4.3 mg) Of a toluene solution of a 0-valent platinum complex of divinyltetramethyldisiloxane (0.04 wt% platinum content) was added. The tube was sealed with Teflon tape and a rubber septum and placed in a 80°C oil bath where it was heated for 2 hours. After cooling, the tube contents were analyzed by gas chromatography revealing a hydrosilylated product yield of 11.5%. The ratio between the terminal hydrosilylated product (phenethyl triethoxysilane) and the interior hydrosilylated product (α-(triethoxysilyl)ethylbenzene) was 15:1.

Example 4. Reaction between styrene and triethoxysilane with platinum catalyst in the presence of N-dimethylsilyl-N-methylacetamide. 473 mg Styrene and 721 mg triethoxysilane were introduced into a glass tube, and 10 mg of N-dimethylsilyl-N-methylacetamide were added using a microsyringe. 0.005 ml (4.3 mg) Of a toluene solution of a 0-valent platinum complex of divinyltetramethyldisiloxane (0.04 wt% platinum content) was added. The tube was sealed with Teflon tape and a rubber septum and placed in a 80°C oil bath where it was heated for 1 hour. After cooling, the tube contents were analyzed by gas chromatography revealing a styrene conversion of about 68% and a hydrosilylated product yield of 63%. The ratio between the terminal hydrosilylated product (phenethyl triethoxysilane) and the interior hydrosilylated product (α-(triethoxysilyl)ethylbenzene) was 43:1.

Example 5. Reaction between styrene and triethoxysilane with platinum catalyst in the presence of bis(2-ethylhexyl) hydrogenphosphate (C₄H₉CH(C₂H₅)CH₂O)₂P(=O)OH). 0.334 g Styrene and 0.540 g triethoxysilane were introduced into a glass tube, and 3 mg of bis(2-ethylhexyl) hydrogenphosphate were added using a microsyringe. 0.8 mg Of a toluene solution of a 0-valent platinum complex of divinylsiloxane (0.4 wt% platinum content) was added. The tube was sealed with Teflon tape and a septum and placed in a 100°C oil bath where it was heated for 1 hour. After cooling, the tube contents were analyzed by gas chromatography revealing a styrene conversion of about 29% and a phenethyl triethoxysilane yield of 16%. The ratio between the phenethyl triethoxysilane and the (α-methylbenzyl)triethoxysilane was 5.8:1.

Comparative Example 1. Reaction between styrene and triethoxysilane with platinum catalyst (no substance acting as auxiliary catalyst). 356 mg Styrene and 562 mg triethoxysilane were introduced into a glass tube, and 0.005 ml (4.3 mg) of a toluene solution of a 0-valent platinum complex of divinyltetramethyldisiloxane (0.04 wt% platinum content) was added. The tube was sealed with Teflon tape and a rubber septum and placed in a 80°C oil bath where it was heated for 2 hours. After cooling, the tube contents were analyzed by gas chromatography revealing a styrene conversion of about 0.5% and a hydrosilylated product yield of 0.3%. The ratio between the terminal hydrosilylated product (phenethyl triethoxysilane) and the interior hydrosilylated product (α-(triethoxysilyl)ethylbenzene) was 2.3:1.

Comparative Example 2. Reaction between styrene and triethoxysilane with platinum catalyst (no substance acting as auxiliary catalyst). 353 mg Styrene and 557 mg triethoxysilane were introduced into a glass tube, and 0.005 ml (4.3 mg) of a toluene solution of a 0-valent platinum complex of divinyltetramethyldisiloxane (0.04 wt% platinum content) was added. The tube was sealed with Teflon tape and a rubber septum and placed in a 80°C oil bath where it was heated for 2 hours. After cooling, the tube contents were analyzed by gas chromatography revealing a hydrosilylated product yield of 11.3%. The ratio between the terminal hydrosilylated product (phenethyl triethoxysilane) and the interior hydrosilylated product (α-(triethoxysilyl)ethylbenzene) was 1.9:1.

Example 6. Reaction between octene-1 and triethoxysilane with platinum catalyst in the presence of trimethylsilyl ester of methanesulfonic acid. 325 mg Octene-1 and 475 mg triethoxysilane were introduced into a glass tube filled with argon gas, and 20 mg of a trimethylsilyl ester of methanesulfonic acid and 0.002 ml (1.7 mg) of a toluene solution of a 0-valent platinum complex of divinyltetramethyldisiloxane (0.04 wt% platinum content) were added. The tube was sealed with Teflon tape and a rubber septum, degassed, and then filled again with argon gas. The tube was placed in a 75°C oil bath where it was heated for 1 hour. After cooling, the tube contents were analyzed by gas chromatography revealing an octyltriethoxysilane yield of 88%.

Comparative Example 3. Reaction between octene-1 and triethoxysilane with platinum catalyst (no substance acting as auxiliary catalyst). 325 mg Octene-1 and 475 mg triethoxysilane were introduced into a glass tube filled with argon gas, and 0.002 mL (1.7 mg) of a toluene solution of a 0-valent platinum complex of divinyltetramethyldisiloxane (0.04 wt% platinum content) were added. The tube was sealed with Teflon tape and a rubber septum, degassed, and then filled again with argon gas. The tube was placed in a 75°C oil bath where it was heated for 1 hour. After cooling, the tube contents were analyzed by gas chromatography revealing that the starting material was unreacted, with no octyltriethoxysilane product.

Example 7. Reaction between allylglycidyl ether and triethoxysilane with platinum catalyst in the presence of N-dimethylsilyl-N-methylacetamide. 548 mg Allylglycidyl ether and 408 mg triethoxysilane were introduced into a glass tube filled with argon gas, and 10 mg of N-dimethylsilyl-N-methylacetamide and 0.005 mL (4.3 mg) of a toluene solution of a 0-valent platinum complex of divinyltetramethyldisiloxane (0.04 wt% platinum content) were added. The tube was sealed with Teflon tape and a rubber septum, degassed, and then filled again with argon gas. The tube was placed in a 100°C oil bath where it was heated for 0.5 hour. After cooling, the tube contents were analyzed by gas chromatography revealing a triethoxysilane conversion of 39% and a glycidoxy propyltriethoxysilane yield of 87 mol% relative to consumed triethoxysilane. The ratio between the 3-(glycidoxy) propyltriethoxysilane and 2-(glycidoxy)-1-(methyl)ethyltriethoxysilane was 1960:1.

Comparative Example 4. Reaction between allylglycidyl ether and triethoxysilane with platinum catalyst (no substance acting as auxiliary catalyst). 548 mg Allylglycidyl ether and 408 mg triethoxysilane were introduced into a glass tube filled with argon gas, and 0.005 mL (4.3 mg) of a toluene solution of a 0-valent platinum complex of divinyltetramethyldisiloxane (0.04 wt% platinum content) were added. The tube was sealed with Teflon tape and a rubber septum, degassed, and filled again with argon gas. The tube was placed in a 100°C oil bath where it was heated for 0.5 hour. After cooling, the tube contents were analyzed by gas chromatography revealing a triethoxysilane conversion of 98%, and a glycidoxy propyltriethoxysilane yield of 87 mol% relative to consumed triethoxysilane. The ratio between the 3-(glycidoxy)propyltriethoxysilane and 2-(glycidoxy)-1-(methyl) ethyltriethoxysilane was 90:1.

Example 8. Reaction between styrene and dimethylchlorosilane with platinum catalyst in the presence of trimethylsilyl-N,N-dimethyl carbamate. 526 mg Styrene and 480 mg dimethylchlorosilane were introduced into a glass tube, and 41 mg of trimethylsilyl-N,N-dimethyl carbamate were added using a microsyringe. 0.65 mg Of a toluene solution of a 0-valent platinum complex of divinylsiloxane (0.4 wt% platinum content) was added. The tube was sealed with Teflon tape and a rubber septum and placed in a 100°C oil bath where it was heated for 20 hours. After cooling, the tube contents were analyzed by gas chromatography revealing a styrene conversion of 38% and a phenethyl dimethylchlorosilane yield of 8.4%. The ratio between the phenethyl dimethylchlorosilane and the (α-methylbenzene) dimethylchlorosilane was 44:1.

Example 9. Reaction between styrene and dimethylchlorosilane with platinum catalyst in the presence of N-dimethylsilyl-N-methylacetamide. 526 mg Styrene and 408 mg dimethylchlorosilane were introduced into a glass tube, and 1 mg of N-dimethylsilyl-N-methylacetamide was added. 2.5 mg Of a toluene solution of a 0-valent platinum complex of divinylsiloxane (0.04 wt% platinum content) were added. The tube was sealed with Teflon tape and a rubber septum and then placed in a 50°C oil bath where it was heated for 30 minutes. After cooling, the tube contents were analyzed by gas chromatography revealing a styrene conversion of 4.8% and a phenethyldimethylchlorosilane yield of 4.4%. The ratio between the phenethyldimethylchlorosilane and (α-methylbenzyl)dimethylchlorosilane was 15:1.

Comparative Example 5. Reaction between styrene and dimethylchlorosilane with platinum catalyst (no substance acting as auxiliary catalyst). 526 mg Styrene and 408 mg dimethylchlorosilane were introduced into a glass tube, and 2.5 mg of a toluene solution of a 0-valent platinum complex of divinylsiloxane (0.04 wt% platinum content) were added. The tube was sealed with Teflon tape and a rubber septum and then placed in a 50°C oil bath where it was heated for 30 minutes. After cooling, the tube contents were analyzed by gas chromatography revealing a styrene conversion of 98% and a phenethyldimethylchlorosilane yield of 84%. The ratio between the phenethyldimethylchlorosilane and (α-methylbenzyl)dimethylchlorosilane was 4.7:1.

Example 10. Reaction between styrene and methyldichlorosilane with platinum catalyst in the presence of trimethylsilyl ester of methanesulfonic acid. 624 mg Styrene and 732 mg methyldichlorosilane were introduced into a glass tube, and 51 mg of a trimethylsilyl ester of methanesulfonic acid was added with a microsyringe. 0.9 mg Of a toluene solution of a 0-valent platinum complex of divinylsiloxane (0.04 wt% platinum content) was added. The tube was sealed with Teflon tape and a rubber septum and placed in a 50°C oil bath where it was heated for 30 minutes. After cooling, the tube contents were analyzed by gas chromatography revealing a styrene conversion of 95% and a phenethylmethyldichlorosilane yield of 71%. The ratio between the phenethylmethyldichlorosilane and the (α-methylbenzyl)methyldichlorosilane was 4.6:1.

Example 11. Reaction between styrene and methyldichlorosilane with platinum catalyst in the presence of trimethylsilyl ester of benzenesulfonic acid. 624 mg Styrene and 732 mg methyldichlorosilane were introduced into a glass tube, and 54 mg of a trimethylsilyl ester of benzenesulfonic acid were added with a microsyringe. 0.9 mg Of a toluene solution of a 0-valent platinum complex of divinylsiloxane (0.04 wt% platinum content) was added. The tube was sealed with Teflon tape and a rubber septum and then placed in a 50°C oil bath where it was heated for 30 minutes. After cooling, the tube contents were analyzed by gas chromatography revealing a styrene conversion of 27% and a phenethylmethyldichlorosilane yield of 19%. The ratio between the phenethylmethyldichlorosilane and the (α-methylbenzyl)methyldichlorosilane was 4.2:1.

Example 12. Reaction between styrene and methyldichlorosilane with platinum catalyst in the presence of sodium 1-octanesulfonate. 624 mg Styrene and 732 mg methyldichlorosilane were introduced into a glass tube, and 40 mg of sodium 1-octanesulfonate were added with a microsyringe. 0.9 mg Of a toluene solution of a 0-valent platinum complex of divinylsiloxane (0.04 wt% platinum content) was added. The tube was sealed with Teflon tape and a rubber septum and then placed in a 100°C oil bath where it was heated for 20 minutes. After cooling, the tube contents were analyzed by gas chromatography revealing a styrene conversion of 71% and a phenethylmethyldichlorosilane yield of 46%. The ratio between the phenethylmethyldichlorosilane and the (α-methylbenzyl)methyldichlorosilane was 18:1.

Example 13. Reaction between styrene and methyldichlorosilane with platinum catalyst in the presence of N,N'-bis(trimethylsilyl)urea. 0.481 g Styrene and 0.549 g methyldichlorosilane were introduced into a glass tube, and an ethanol solution containing 0.124 mg N,N'-bis(trimethylsilyl)urea (6.2 wt%) was added with a microsyringe. 1 mg Of a toluene solution of a 0-valent platinum complex of divinylsiloxane (0.04 wt% platinum content) was added. The tube was sealed with Teflon tape and a septum and then placed in a 100°C oil bath where it was heated for 20 minutes. After cooling, the tube contents were analyzed by gas chromatography revealing a styrene conversion of 89% and a phenethylmethyldichlorosilane yield of 84%. The ratio between the phenethylmethyldichlorosilane and the (α-methylbenzyl)methyldichlorosilane was 21:1.

Example 14. Reaction between styrene and methyldichlorosilane with platinum catalyst in the presence of urea. 0.384 g Styrene and 0.435 g methyldichlorosilane were introduced into a glass tube, and an ethanol solution containing 0.255 mg urea (5.1 wt%) was added with a microsyringe. 1 mg Of a toluene solution of 0-valent platinum complex of divinylsiloxane (0.04 wt% platinum content) was added. The reaction tube was sealed with Teflon tape and a septum and placed in a 100°C oil bath where it was heated for 20 minutes. After cooling, the tube contents were analyzed by gas chromatography revealing a styrene conversion of 64% and a phenethylmethyldichlorosilane yield of 61%. The ratio between the phenethylmethyldichlorosilane and the (α-methylbenzyl)methyldichlorosilane was 102:1.

Comparative Example 6. Reaction between styrene and methyldichlorosilane with platinum catalyst (no substance acting as auxiliary catalyst). 624 mg Styrene and 732 mg methyldichlorosilane were introduced into a glass tube, and 0.9 mg of a toluene solution of a 0-valent platinum complex of divinylsiloxane (0.04 wt% platinum content) was added. The tube was sealed with Teflon tape and a rubber septum and placed in a 50°C oil bath where it was heated for 30 minutes. After cooling, the tube contents were analyzed by gas chromatography revealing a styrene conversion of 75% and a phenethylmethyldichlorosilane yield of 22%. The ratio between the phenethylmethyldichlorosilane and the (α-methylbenzyl)methyldichlorosilane was 1.2:1.

Example 15. Reaction between styrene and trichlorosilane with platinum catalyst in the presence of a trimethylsilyl ester of methanesulfonic acid. 518 mg Styrene and 694 mg trichlorosilane were introduced into a glass tube, and 42 mg of a trimethylsilyl ester of methanesulfonic acid were added. 2.5 mg Of a toluene solution of a 0-valent platinum complex of divinylsiloxane (0.04 wt% platinum content) were added. The tube was sealed with Teflon tape and a rubber septum and placed in a 50°C oil bath where it was heated for 30 minutes. After cooling, the tube contents were analyzed by gas chromatography revealing a styrene conversion of 11% and a phenethyltrichlorosilane yield of 8.7%. The ratio between the phenethyltrichlorosilane and the (α-methylbenzyl)trichlorosilane was 390:1.

Comparative Example 7. Reaction between styrene and trichlorosilane with platinum catalyst (no substance acting as auxiliary catalyst). 518 mg Styrene and 694 mg trichlorosilane were introduced into a glass tube, and 2.5 mg of a toluene solution of a 0-valent platinum complex of divinylsiloxane (0.04 wt% platinum content) were added. The tube was sealed with Teflon tape and a rubber septum and then placed in a 50°C oil bath where it was heated for 30 minutes. After cooling, the tube contents were analyzed by gas chromatography revealing a styrene conversion of 93% and a phenethyltrichlorosilane yield of 39%. The ratio between the phenethyltrichlorosilane and the (α-methylbenzyl)trichlorosilane was 5.5:1.

Example 16. Reaction between allyl chloride and methyldichlorosilane with platinum catalyst in the presence of N-dimethylsilyl-N-methylacetamide. 0.405 g Allyl chloride and 0.912 g methyldichlorosilane were introduced into a glass tube, and 11.5 mg of N-dimethylsilyl-N-methylacetamide were added with a microsyringe. 0.7 mg Of a toluene solution of a 0-valent platinum complex of divinylsiloxane (4.0 wt% platinum content) was added. The tube was sealed and then placed in a 50°C oil bath where it was heated for 20 minutes. After cooling, the tube contents were analyzed by gas chromatography revealing an allyl chloride conversion of 92% and a chloropropylmethyldichlorosilane yield of 75%. The ratio between the chloropropylmethyldichlorosilane and propylmethyldichlorosilane was 4.57:1.

Example 17. Reaction between allyl chloride and methyldichlorosilane with platinum catalyst in the presence of a trimethylsilyl ester of methanesulfonic acid. 0.405 g Allyl chloride and 0.912 g methyldichlorosilane were introduced into a glass tube, and 15 mg of a trimethylsilyl ester of methanesulfonic acid were added with a microsyringe. 0.7 mg Of a toluene solution of a 0-valent platinum complex of divinylsiloxane (4.0 wt% platinum content) was added. The tube was sealed and placed in a 50°C oil bath where it was heated for 20 hours. After cooling, the tube contents were analyzed by gas chromatography revealing an allyl chloride conversion of 97% and a chloropropylmethyldichlorosilane yield of 83%. The ratio between the chloropropylmethyldichlorosilane and propylmethyldichlorosilane was 5.69:1.

Comparative Example 8. Reaction between allyl chloride and methyldichlorosilane with platinum catalyst in the presence of methanesulfonic acid. 0.405 g Allyl chloride and 0.912 g methyldichlorosilane were introduced into a glass tube, and 8 mg of methanesulfonic acid were added with a microsyringe. 0.7 mg Of a toluene solution of a 0-valent platinum complex of divinylsiloxane (4.0 wt% platinum content) was added. The tube was sealed and placed in a 50°C oil bath where it was heated for 20 hours. After cooling, the tube contents were analyzed by gas chromatography revealing an allyl chloride conversion of 98% and a chloropropylmethyldichlorosilane yield of 68%. The ratio between the chloropropylmethyldichlorosilane and propylmethyldichlorosilane was 2.26:1.

Example 18. Reaction between allyl chloride and methyldichlorosilane with platinum catalyst in the presence of bis(2-ethylhexyl) hydrogen phosphate. 0.327 g Allyl chloride and 0.751 g methyldichlorosilane were introduced into a glass tube, and 3.5 mg of bis(2-ethylhexyl) hydrogen phosphate were added with a microsyringe. 2.2 mg Of a toluene solution of a 0-valent platinum complex of divinylsiloxane (0.4 wt% platinum content) were added. The tube was sealed and placed in a 80°C oil bath where it was heated for 15 minutes. After cooling, the tube contents were analyzed by gas chromatography revealing an allyl chloride conversion of 97% and a chloropropylmethyldichlorosilane yield of 83%. The ratio between the chloropropylmethyldichlorosilane and propylmethyldichlorosilane was 6.35:1.

Example 19. Reaction between allyl chloride and methyldichlorosilane with platinum catalyst in the presence of N-hydroxysuccinimide. 0.361 g Allyl chloride and 0.829 g methyldichlorosilane were introduced into a glass tube, and a 40 wt% ethanol solution of 10 mg of N-hydroxysuccinimide was added with a microsyringe. 2.3 mg Of a toluene solution of a 0-valent platinum complex of divinylsiloxane (0.4 wt% platinum content) were added. The tube was sealed and placed into a 80°C oil bath where it was heated for 72 hours. After cooling, the tube contents were analyzed by gas chromatography, revealing an allyl chloride conversion of 95% and a chloropropylmethyldichlorosilane yield of 73%. The ratio between the chloropropylmethyldichlorosilane and propylmethyldichlorosilane was 3.07:1.

Example 20. Reaction between allyl chloride and methyldichlorosilane with platinum catalyst in the presence of trimethyl phosphate. 0.370 g Allyl chloride and 0.841 g methyldichlorosilane were introduced into a glass tube, and 7 mg of trimethyl phosphate were added with a microsyringe. 2.5 mg Of a toluene solution of a 0-valent platinum complex of divinylsiloxane (0.4 wt% platinum content) were added. The tube was sealed and placed in a 80°C oil bath where it was heated for 1 hour. After cooling, the tube contents were analyzed by gas chromatography revealing an allyl chloride conversion of 64% and a chloropropylmethyldichlorosilane yield of 65%. The ratio between the chloropropylmethyldichlorosilane and propylmethyldichlorosilane was 6.44:1.

Example 21. Reaction between allyl chloride and methyldichlorosilane with platinum catalyst in the presence of triethyl phosphate. 0.370 g Allyl chloride and 0.841 g methyldichlorosilane were introduced into a glass tube, and 8.5 mg of triethyl phosphate were added with a microsyringe. 2.5 mg Of a toluene solution of a 0-valent platinum complex of divinylsiloxane (0.4 wt% platinum content) were added. The tube was sealed and placed in a 80°C oil bath where it was heated for 1 hour. After cooling, the tube contents were analyzed by gas chromatography revealing an allyl chloride conversion of 84% and a chloropropylmethyldichlorosilane yield of 75%. The ratio between the chloropropylmethyldichlorosilane and propylmethyldichlorosilane was 7.02:1.

Example 22. Reaction between allyl chloride and methyldichlorosilane with platinum catalyst in the presence of 8-hydroxyquinoline. 0.376 g Allyl chloride and 0.850 g methyldichlorosilane were introduced into a glass tube, and 8 mg of 8-hydroxyquinoline were added with a microsyringe. 2.5 mg Of a toluene solution of a 0-valent platinum complex of divinylsiloxane (0.4 wt% platinum content) were added. The tube was sealed and placed in a 80°C oil bath where it was heated for 1 hour. After cooling, the tube contents were analyzed by gas chromatography revealing an allyl chloride conversion of 99% and a chloropropylmethyldichlorosilane yield of 79%. The ratio between the chloropropylmethyldichlorosilane and propylmethyldichlorosilane was 3.83:1.

Example 23. Reaction between allyl chloride and methyldichlorosilane with platinum catalyst in the presence of 3-trimethylsilyl-2-oxazolidinone. 0.368 g Allyl chloride and 0.831 g methyldichlorosilane were introduced into a glass tube, and 39 mg of 3-trimethylsilyl-2-oxazolidinone were added with a microsyringe. 2.5 mg Of a toluene solution of a 0-valent platinum complex of divinylsiloxane (0.4 wt% platinum content) were added. The tube was sealed and placed in a 80°C oil bath where it was heated for 1 hour. After cooling, the tube contents were analyzed by gas chromatography revealing an allyl chloride conversion of 88% and a chloropropylmethyldichlorosilane yield of 72%. The ratio between the chloropropylmethyldichlorosilane and propylmethyldichlorosilane was 5.04:1.

Example 24. Reaction between allyl chloride and methyldichlorosilane with platinum catalyst in the presence of 2-hydroxypyridine. 0.361 g Allyl chloride and 0.831 g methyldichlorosilane were introduced into a glass tube, and a 1 wt% toluene solution of 80 mg of 2-hydroxypyridine was added with a microsyringe. 2.5 mg of a toluene solution of a 0-valent platinum complex of divinylsiloxane (0.4 wt% platinum content) were added. The tube was sealed and placed in a 80°C oil bath where it was heated for 72 hours. After cooling, the tube contents were analyzed by gas chromatography revealing an allyl chloride conversion of 99% and a chloropropylmethyldichlorosilane yield of 79%. The ratio between the chloropropylmethyldichlorosilane and propylmethyldichlorosilane was 4.0:1.

Example 25. Reaction between styrene and methyldichlorosilane with platinum catalyst in the presence of sodium 1-octanesulfonate. 624 mg Styrene and 732 mg methyldichlorosilane were introduced into a glass tube, and 40 mg of sodium 1-octanesulfonate were added. 0.9 mg Of a toluene solution of a 0-valent platinum complex of divinylsiloxane (0.4 wt% platinum content) was added. The tube was sealed and placed in a 100°C oil bath where it was heated for 20 hours. After cooling, the tube contents were analyzed by gas chromatography revealing a styrene conversion of 71% and a phenethylmethyldichlorosilane yield of 46%. The ratio between the phenethylmethyldichlorosilane and the (α-methylbenzyl)methyldichlorosilane was 18:1.

Example 26. Reaction between styrene and methyldichlorosilane with platinum catalyst in the presence of sodium cyclohexylsulfamate. 427 mg Styrene and 498 mg methyldichlorosilane were introduced into a glass tube, and 38 mg of sodium cyclohexylsulfamate were added. 1 mg Of a toluene solution of a 0-valent platinum complex of divinylsiloxane (0.4 wt% platinum content) was added. The tube was sealed and placed in a 50°C oil bath where it was heated for 72 hours. After cooling, the tube contents were analyzed by gas chromatography revealing a styrene conversion of 85% and a phenethylmethyldichlorosilane yield of 70%. The ratio between the phenethylmethyldichlorosilane and the (α-methylbenzyl)methyldichlorosilane was 8.7:1.

Example 27. Reaction between styrene and methyldichlorosilane with platinum catalyst in the presence of sodium dodecylsulfate. 427 mg Styrene and 498 mg methyldichlorosilane were introduced into a glass tube, and 55 mg of sodium dodecylsulfate was added. 1 mg Of a toluene solution of a 0-valent platinum complex of divinylsiloxane (0.4 wt% platinum content) was added. The tube was sealed and placed in a 100°C oil bath where it was heated for 20 hours. After cooling, the tube contents were analyzed by gas chromatography revealing a styrene conversion of 45% and a phenethylmethyldichlorosilane yield of 20%. The ratio between the phenethylmethyldichlorosilane and the (α-methylbenzyl)methyldichlorosilane was 34:1.

Comparative Example 9. Reaction between allyl chloride and methyldichlorosilane with platinum catalyst (no substance acting as auxiliary catalyst). 0.405 g Allyl chloride and 0.912 g methyldichlorosilane were introduced into a glass tube, and 0.7 mg Of a toluene solution of a 0-valent platinum complex of divinylsiloxane (4.0 wt% platinum content) was added. The tube was sealed and placed in a 50°C oil bath where it was heated for 20 hours. After cooling, the tube contents were analyzed by gas chromatography, revealing an allyl chloride conversion of 99% and a chloropropylmethyldichlorosilane yield of 62%. The ratio between the chloropropylmethyldichlorosilane and propylmethyldichlorosilane was 1.66:1.

Comparative Example 10. Reaction between allyl chloride and methyldichlorosilane with platinum catalyst (no substance acting as auxiliary catalyst). 0.327 g Allyl chloride and 0.751 g methyldichlorosilane were introduced into a glass tube, and 2.2 mg of a toluene solution of a 0-valent platinum complex of divinylsiloxane (0.4 wt% platinum content) were added. The tube was sealed and placed in a 80°C oil bath where it was heated for 15 minutes. After cooling, the tube contents were analyzed by gas chromatography revealing an allyl chloride conversion of 99% and a chloropropylmethyldichlorosilane yield of 72%. The ratio between the chloropropylmethyldichlorosilane and propylmethyldichlorosilane was 2.69:1.

Example 28. Reaction between allyl chloride and trichlorosilane with platinum catalyst in the presence of tris(butoxyethyl) phosphate. 0.367 g Allyl chloride and 0.976 g trichlorosilane were introduced into a glass tube, and 2 mg of tris(butoxyethyl) phosphate were added with a microsyringe. 5 mg Of a toluene solution of a 0-valent platinum complex of divinylsiloxane (0.2 wt% platinum content) were added. The tube was sealed and placed in a 100°C oil bath where it was heated for 1 hour. After cooling, the tube contents were analyzed by gas chromatography revealing an allyl chloride conversion of 66% and a chloropropyltrichlorosilane yield of 79%. The ratio between the chloropropyltrichlorosilane and propyltrichlorosilane was 7.47:1.

Example 29. Reaction between allyl chloride and trichlorosilane with platinum catalyst in the presence of bis(2-ethylhexyl) hydrogenphosphate. 0.327 g Allyl chloride and 0.870 g trichlorosilane were introduced into a glass tube, and 0.7 mg of bis(2-ethylhexyl) hydrogenphosphate was added with a microsyringe. 4.5 mg Of a toluene solution of a 0-valent platinum complex of divinylsiloxane (0.2 wt% platinum content) were added. The tube was sealed and placed in a 100°C oil bath where it was heated for 1 hour. After cooling, the tube contents were analyzed by gas chromatography revealing an allyl chloride conversion of 72% and a chloropropyltrichlorosilane yield of 46%. The ratio between the chloropropyltrichlorosilane and propyltrichlorosilane was 6.65:1.

Example 30. Reaction between allyl chloride and trichlorosilane with platinum catalyst in the presence of tris(4-t-butylphenyl) phosphate. 0.327 g Allyl chloride and 0.873 g trichlorosilane were introduced into a glass tube, and 28 wt% toluene solution of 35 mg of tris(4-t-butylphenyl) phosphate was added with a microsyringe. 4.5 mg Of a toluene solution of a 0-valent platinum complex of divinylsiloxane (0.2 wt% platinum content) were added. The tube was scaled and placed in a 100°C oil bath where it was heated for 1 hour. After cooling, the tube contents were analyzed by gas chromatography revealing an allyl chloride conversion of 99% and a chloropropyltrichlorosilane yield of 75%. The ratio between the chloropropyltrichlorosilane and propyltrichlorosilane was 3.20:1.

Example 31. Reaction between allyl chloride and trichlorosilane with platinum catalyst in the presence of dimethylsilyl acetamide (HMe₂SiNMeCOMe). 0.504 g Allyl chloride and 1.148 g trichlorosilane were introduced into a glass tube, and 4.5 mg of dimethylsilyl acetamide (HMe₂SiNMeCOMe) were added with a microsyringe. 7 mg Of a toluene solution of a 0-valent platinum complex of divinylsiloxane (0.2 wt% platinum content) were added. The tube was sealed and placed in a 100°C oil bath where it was heated for 72 hours. After cooling, the tube contents were analyzed by gas chromatography revealing an allyl chloride conversion of 99% and a chloropropyltrichlorosilane yield of 74%. The ratio between the chloropropyltrichlorosilane and propyltrichlorosilane was 3.10:1.

Comparative Example 11. Reaction between allyl chloride and trichlorosilane with platinum catalyst (no substance acting as auxiliary catalyst). 0.327 g Allyl chloride and 0.873 g trichlorosilane were introduced into a glass tube, and 4.5 mg of a toluene solution of a 0-valent platinum complex of divinylsiloxane (0.2 wt% platinum content) were added. The tube was sealed and placed in a 100°C oil bath where it was heated for 1 hour. After cooling, the tube contents were analyzed by gas chromatography revealing an allyl chloride conversion of 96% and a chloropropyltrichlorosilane yield of 42%. The ratio between the chloropropyltrichlorosilane and propyltrichlorosilane was 1.62:1.

## Claims

1. A method of preparing an organosilicon compound comprising effecting a hydrosilylation reaction between (a) unsaturated compounds with terminal unsaturated groups and (b) silane compounds described by formula HSiR⁰ₘW₃₋ₘ, where W is selected from C₁ to C₆ alkoxy groups, C₆ to C₁₀ aryloxy groups, and halogen atoms, R⁰ is an organic group, and m is 0, 1 or 2 in the presence of (c) a platinum catalyst and (d) an auxiliary catalyst selected from (1) silyl esters of acids derived from oxo acids of sulfur; (2) amide compounds having N-Si bonds; (3) urea compounds; (4) silyl esters of carbamic acid; (5) phosphoric acid compounds; and (6) cyclic compounds described by the following formulae selected from the group consisting of (i) hydroxypyridine compounds, (ii) 8-hydroxyquinoline compounds, (iii) oxazolidinone compounds, and (iv) N-hydroxysuccinimide compounds: 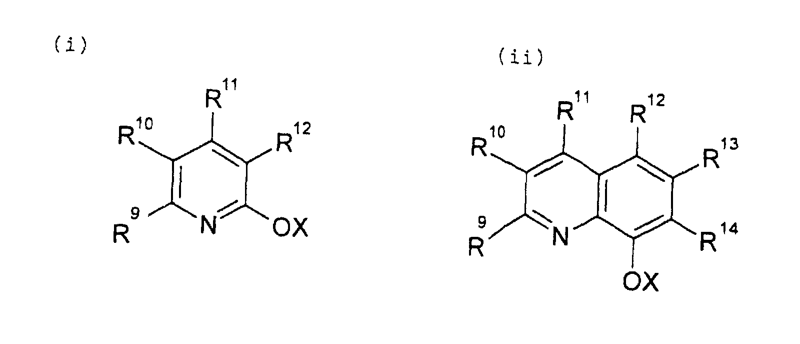 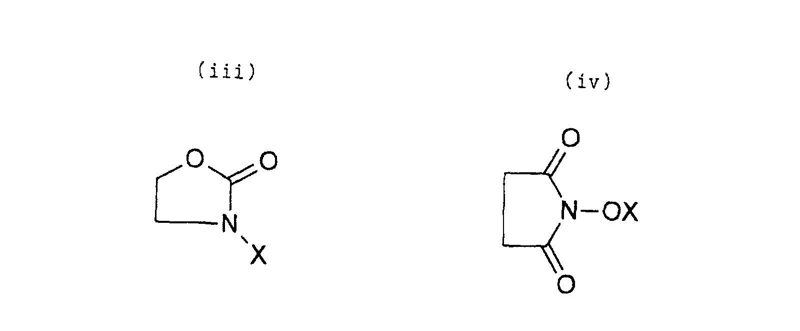 where R⁹, R¹⁰, R¹¹, R¹², R¹³, and R¹⁴ are each independently selected from hydrogen atoms, halogen atoms, C₁ to C₁₀ alkyl groups, C₆ to C₁₀ aryl groups, C₁ to C₁₀ alkoxy groups, and groups described by R²,₃Si-, where each R² is independently selected from C₁ to C₁₀ hydrocarbon groups, C₁ to C₁₀ alkoxy groups, chlorine atoms, and hydrogen atoms with a maximum of two hydrogen atoms present; and X is a hydrogen atom or a group described by R²₃Si-, where R² is the same as described above.

2. A method of preparing organosilicon compounds according to Claim 1, where (d)(1) to (d)(5) of the auxiliary catalyst compounds are described by the general formulae,
(d)(1):R¹S(=O)₂OSiR²¹₃, where R¹ is selected from C₁ to C₁₀ alkyl groups, C₆ to C₁₈ aryl groups, groups described by R¹⁸₂N-, where each R¹⁸ is independently selected from C₁ to C₁₀ alkyl groups, C₆ to C₁₈ aryl groups, hydrogen atom with a maximum of one hydrogen atom present, C₁ to C₁₀ haloalkyl groups, C₆ to C₁₈ haloaryl groups, halogen atoms, C₁ to C₁₀ alkoxy groups, and siloxy groups described by formula R³⁰₃SiO-, where each R³⁰ is an independently selected C₁ to C₆ alkyl groups; and each R²¹ is independently selected from C₁ to C₁₀ hydrocarbon groups, C₁ to C₁₀ alkoxy groups, chlorine atoms, hydrogen atoms with a maximum of two hydrogen atoms present, and R¹S(=O)₂O-, where R¹ is the same as described above;
(d)(2):R³C(=O)NR⁴SiR²²₃, where R³ is selected from C₁ to C₁₀ alkyl groups, C₆ to C₁₈ aryl groups, C₁ to C₁₀ haloalkyl groups, and C₆ to C₁₈ haloaryl groups; R⁴ is a C₁ to C₁₀ hydrocarbon group or hydrogen atom; and each R²² is independently selected from C₁ to C₁₀ hydrocarbon groups, C₁ to C₁₀ alkoxy groups, chlorine atoms, hydrogen atoms with a maximum of two hydrogen atoms present, and R³C(=O)NR⁴-, where R³ and R⁴ are the same as above;
(d)(3): R⁵R⁶NC(=O)NR⁴X¹, where R⁵ and R⁶ are each independently selected from hydrogen atoms, C₁ to C₁₀ alkyl groups, C₆ to C₁₈ aryl groups, C₁ to C₁₀ haloalkyl groups, C₆ to C₁₈ haloaryl groups, and silyl groups described by R₃Si- where each R is an independently selected C₁ to C₃ alkyl group or hydrogen atom with a maximum of two hydrogen atoms present, R⁴ is the same as described above; X¹ is selected from the group consisting of R²³,₃Si- and hydrogen atoms, where each R²³ is independently selected from C₁ to C₁₀ hydrocarbon groups, C₁ to C₁₀ alkoxy groups, chlorine atoms, hydrogen atoms with a maximum of two hydrogen atoms present, and R⁵R⁶NC(=O)-, where R⁵ and R⁶ are the same as described above;
(d)(4): R⁷R⁸NC(=O)OSiR²⁴₃, where R⁷ and R⁸ are each independently selected from C₁ to C₁₀ alkyl groups, C₆ to C₁₈ aryl groups, and hydrogen atoms with a maximum of one hydrogen atom present; and each R²⁴ is independently selected from C₁ to C₁₀ hydrocarbon groups, C₁ to C₁₀ alkoxy groups, chlorine atoms, hydrogen atoms with a maximum of two hydrogen atoms present, and R⁷R⁸NC(=O)-, where R⁷ and R⁸ are the same as described above; and
(d)(5): (R¹⁶O)₃P(=O),, where each R¹⁶ is independently selected from hydrogen atoms with a maximum of two hydrogen atoms present, C₁ to C₁₀ alkyl groups, C₆ to C₁₈ aryl groups, C₁ to C₁₀ haloalkyl groups, C₆ to C₁₈ haloaryl groups, and a maximum of two silyl groups represented by R²⁵₃Si-, where each R²⁵ is independently selected from C₁ to C₁₀ hydrocarbon groups, C₁ to C₁₀ alkoxy groups, chlorine atoms, hydrogen atoms with a maximum of two hydrogen atoms present, and (R¹⁵O)₂P(=O)O-, where each R¹⁵ is independently selected from hydrogen atoms with a maximum of two hydrogen atoms present, C₁ to C₁₀ alkyl groups, C₆ to C₁₈ aryl groups, C₁ to C₁₀ haloalkyl groups, and C₆ to C₁₈ haloaryl groups.

3. A method of preparing organosilicon compounds according to Claim 1 or 2, where component (d) is an *in situ* formed auxiliary catalyst.

4. A method of preparing organosilicon compounds according to any one of Claims 1 to 3, where component (a) is selected from styrene or styrene derivative and allyl compounds.

5. A method of preparing organosilicon compounds according to any one of Claims 1 to 4, where component (b) is selected from trimethoxysilane, methyldimethoxysilane, dimethylmethoxysilane, triethoxysilane, methyldiethoxysilane, dimethylethoxysilane, dimethylchlorosilane, methyldichlorosilane, and trichlorosilane.

6. A method of preparing organosilicon compounds according to any one of Claims 1 to 5, where (d)(1) is selected from silyl esters of alkylsulfonic acids and silyl esters of arysulfonic acids.

7. A method of preparing organosilicon compounds according to any one of Claims 1 to 5, where (d)(2) is selected from N-dialkylsilylacetamides and N-dialkylsilyl-N-alkylacetamides.

8. A method of preparing organosilicon compounds according to any one of Claims 1 to 5, where (d)(3) is selected from urea and N,N'-bis(trialkylsilyl)ureas.

9. A method of preparing organosilicon compounds according to any one of Claims 1 to 5, where (d)(4) is a trialkylsilyl-N,N-dialkylcarbamate.

10. A method of preparing organosilicon compounds according to any one of Claims 1 to 5, where (d)(5) is a trialkyl phosphate.

11. A method of preparing organosilicon compounds according to any one of Claims 1 to 5, where (d)(6) is selected from 2-hydroxypyridine, 8-hydroxyquinoline, oxazolidinone, 3-trimethylsilyl-2-oxazolidinone, and N-hydroxysuccinimide.

12. A method of preparing organosilicon compounds according to any one of Claims 1 to 11, where component (d) comprises 0.01 to 20 Wt.%, relative to the total weight of components (a) and (b).

13. A method of preparing organosilicon compounds according to any one of Claims 1 to 12, where component (d) comprises 0.05 to 10 Wt.%, relative to the total weight of components (a) and (b).

14. A method of preparing organosilicon compounds according to any one of Claims 1 to 13, where component (d) is an *in situ* formed auxiliary catalyst formed from a metal salt compound.

## Patentansprüche

1. Verfahren zur Herstellung einer Organosiliciumverbindung, umfassend Bewirken einer Hydrosilylierungsreaktion zwischen (a) ungesättigten Verbindungen mit endständigen ungesättigten Gruppen und (b) Silanverbindungen, beschrieben durch Formel HSiR⁰ₘW₃₋ₘ, worin W ausgewählt ist aus C₁-C₆-Alkoxygruppen, C₆-C₁₀-Aryloxygruppen und Halogenatomen, R⁰ eine organische Gruppe ist und m gleich 0, 1 oder 2 ist, in Gegenwart von (c) einem Platinkatalysator und (d) einem Hilfskatalysator, ausgewählt aus (1) Silylestern von Säuren, die sich von Oxosäuren von Schwefel ableiten, (2) Amidverbindungen mit N-Si-Bindungen, (3) Harnstoffverbindungen, (4) Silylestern von Carbaminsäure, (5) Phosphorsäureverbindungen und (6) cyclischen Verbindungen, beschrieben durch die folgenden Formeln, ausgewählt aus der Gruppe bestehend aus (i) Hydroxypyridinverbindungen, (ii) 8-Hydroxychinolinverbindungen, (iii) Oxazolidinonverbindunen und (iv) N-Hydroxysuccinimidverbindungen: 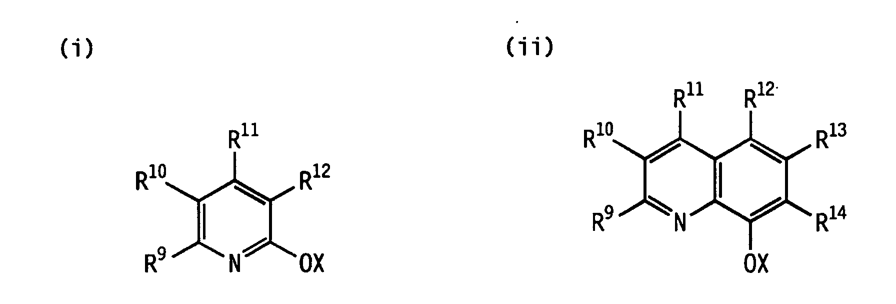 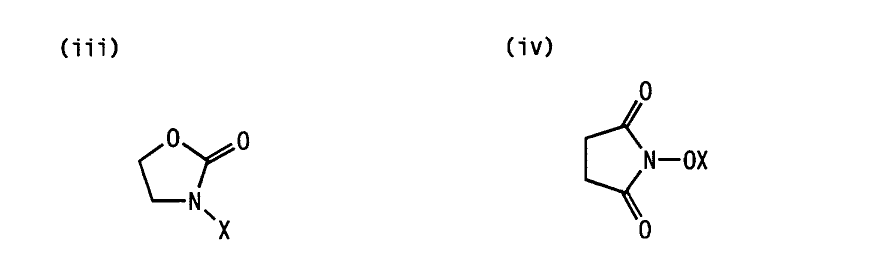 worin R⁹, R¹⁰, R¹¹, R¹², R¹³ und R¹⁴ jeweils unabhängig voneinander ausgewählt sind aus Wasserstoffatomen, Halogenatomen, C₁-C₁₀-Alkylgruppen, C₆-C₁₀-Arylgruppen, C₁-C₁₀-Alkoxygruppen und Gruppen, beschrieben durch R²₃Si-, worin jedes R² unabhängig voneinander ausgewählt ist aus C₁-C₁₀-Kohlenwasserstoffgruppen, C₁-C₁₀-Alkoxygruppen, Chloratomen und Wasserstoffatomen, wobei maximal zwei Wasserstoffatome vorhanden sind, und X ein Wasserstoffatom oder eine Gruppe, beschrieben durch R²₃Si-, ist, worin R² das gleiche wie oben beschrieben ist.

2. Verfahren zur Herstellung von Organosiliciumverbindungen nach Anspruch 1, wobei (d)(1) bis (d)(5) der Hilfskatalysatorverbindungen durch die allgemeinen Formeln:
(d)(1): R¹S(=O)₂OSiR²¹₃, worin R¹ ausgewählt ist aus C₁-C₁₀-Alkylgruppen, C₆-C₁₈-Arylgruppen, Gruppen, beschrieben durch R¹⁸₂N-, worin jedes R¹⁸ unabhängig voneinander ausgewählt ist aus C₁-C₁₀-Alkylgruppen, C₆-C₁₈-Arylgruppen, Wasserstoffatomen, wobei maximal ein Wasserstoffatom vorhanden ist, C₁-C₁₀-Halogenalkylgruppen, C₆-C₁₈-Halogenarylgruppen, Halogenatomen, C₁-C₁₀-Alkoxygruppen und Siloxygruppen, beschrieben durch Formel R³⁰₃SiO-, worin jedes R³⁰ unabhängig voneinander ausgewählt ist aus C₁-C₆-Alkylgruppen, und jedes R²¹ unabhängig voneinander ausgewählt ist aus C₁-C₁₀-Kohlenwasserstoffgruppen, C₁-C₁₀-Alkoxygruppen, Chloratomen, Wasserstoffatomen, wobei maximal zwei Wasserstoffatome vorhanden sind, und R¹S(=O)₂O-, wobei R¹ das gleiche wie oben beschrieben ist;
(d)(2): R³C(=O)NR⁴SiR²²₃, worin R³ ausgewählt ist aus C₁-C₁₀-Alkylgruppen, C₆-C₁₈-Arylgruppen, C₁-C₁₀-Halogenalkylgruppen und C₆-C₁₈-Halogenarylgruppen; R⁴ eine C₁-C₁₀-Kohlenwasserstoffgruppe oder ein Wasserstoffatom ist und jedes R²² unabhängig voneinander ausgewählt ist aus C₁-C₁₀-Kohlenwasserstoffgruppen, C₁-C₁₀-Alkoxygruppen, Chloratomen, Wasserstoffatomen, wobei maximal zwei Wasserstoffatome vorhanden sind, und R³C(=O)NR⁴-, worin R³ und R⁴ die gleichen wie oben sind;
(d)(3): R⁵R⁶NC(=O)NR⁴X¹, worin R⁵ und R⁶ jeweils unabhängig voneinander ausgewählt sind aus Wasserstoffatomen, C₁-C₁₀-Alkylgruppen, C₆-C₁₈-Arylgruppen, C₁-C₁₀-Halogenalkylgruppen, C₆-C₁₈-Halogenarylgruppen und Silylgruppen, beschrieben durch R₃Si-, worin jedes R unabhängig voneinander ausgewählt ist aus C₁-C₃-Alkylgruppen oder einem Wasserstoffatom, wobei maximal zwei Wasserstoffatome vorhanden sind, R⁴ das gleiche wie oben beschrieben ist; X¹ ausgewählt ist aus der Gruppe von R²³₃Si- und Wasserstoffatomen, wobei jedes R²³ unabhängig voneinander ausgewählt ist aus C₁-C₁₀-Kohlenwasserstoffgruppen, C₁-C₁₀-Alkoxygruppen, Chloratomen, Wasserstoffatomen, wobei maximal zwei Wasserstoffatome vorhanden sind, und R⁵R⁶NC(=O)-, worin R⁵ und R⁶ die gleichen wie oben beschrieben sind;
(d)(4): R⁷R⁸NC(=O)OSiR²⁴₃, worin R⁷ und R⁸ jeweils unabhängig voneinander ausgewählt sind aus C₁-C₁₀-Alkylgruppen, C₆-C₁₈-Arylgruppen und Wasserstoffatomen, wobei maximal ein Wasserstoffatom vorhanden ist, und jedes R²⁴ unabhängig ausgewählt ist aus C₁-C₁₀-Kohlenwasserstoffgruppen, C₁-C₁₀-Alkoxygruppen, Chloratomen, Wasserstoffatomen, wobei maximal zwei Wasserstoffatome vorhanden sind, und R⁷R⁸NC(=O)-, worin R⁷ und R⁸ die gleichen wie oben beschrieben sind, und
(d)(5): (R¹⁶O)₃P(=O), worin jedes R¹⁶ unabhängig voneinander ausgewählt ist aus Wasserstoffatomen, wobei maximal zwei Wasserstoffatome vorhanden sind, C₁-C₁₀-Alkylgruppen, C₆-C₁₈-Arylgruppen, C₁-C₁₀-Halogenalkylgruppen, C₆-C₁₈-Halogenarylgruppen und maximal zwei Silylgruppen, dargestellt durch R²⁵₃Si-, worin jedes R²⁵ unabhängig voneinander ausgewählt ist aus C₁-C₁₀-Kohlenwasserstoffgruppen, C₁-C₁₀-Alkoxygruppen, Chloratomen, Wasserstoffatomen, wobei maximal zwei Wasserstoffatome vorhanden sind, und (R¹⁵O)₂P(=O)O-, worin jedes R¹⁵ unabhängig voneinander ausgewählt ist aus Wasserstoffatomen, wobei maximal zwei Wasserstoffatome vorhanden sind, C₁-C₁₀-Alkylgruppen, C₆-C₁₈-Arylgruppen, C₁-C₁₀-Halogenalkylgruppen und C₆-C₁₈-Halogenarylgruppen, beschrieben sind.

3. Verfahren zur Herstellung von Organosiliciumverbindungen nach Anspruch 1 oder 2, wobei Komponente (d) ein in situ gebildeter Hilfskatalysator ist.

4. Verfahren zur Herstellung von Organosiliciumverbindungen nach einem der Ansprüche 1 bis 3, wobei Komponente (a) ausgewählt ist aus Styrol oder Styrolderivaten und Allylverbindungen.

5. Verfahren zur Herstellung von Organosiliciumverbindungen nach einem der Ansprüche 1 bis 4, wobei Komponente (b) ausgewählt ist aus Trimethoxysilan, Methyldimethoxysilan, Dimethylmethoxysilan, Triethoxysilan, Methyldiethoxysilan, Dimethlyethoxysilan, Dimethylchlorsilan, Methyldichlorsilan und Trichlorsilan.

6. Verfahren zur Herstellung von Organosiliciumverbindungen nach einem der Ansprüche 1 bis 5, wobei (d)(1) ausgewählt ist aus Silylestern von Alkylsulfonsäuren und Silylestern von Arylsulfonsäuren.

7. Verfahren zur Herstellung von Organosiliciumverbindungen nach einem der Ansprüche 1 bis 5, wobei (d)(2) ausgewählt ist aus N-Dialkylsilylacetamiden und N-Dialkylsilyl-N-alkylacetamiden.

8. Verfahren zur Herstellung von Organosiliciumverbindungen nach einem der Ansprüche 1 bis 5, wobei (d)(3) ausgewählt ist aus Harnstoff und N,N'-Bis(trialkylsilyl)harnstoffen.

9. Verfahren zur Herstellung von Organosiliciumverbindungen nach einem der Ansprüche 1 bis 5, wobei (d)(4) ein Trialkylsilyl-N,N'dialkylcarbamat ist.

10. Verfahren zur Herstellung von Organosiliciumverbindungen nach einem der Ansprüche 1 bis 5, wobei (d)(5) ein Trialkylphosphat ist.

11. Verfahren zur Herstellung von Organosiliciumverbindungen nach einem der Ansprüche 1 bis 5, wobei (d)(6) ausgewählt ist aus 2-Hydroxypyridin, 8-Hydroxychinolin, Oxazolidinon, 3-Trimethylsilyl-2-oxazolidinon und N-Hydroxysuccinimid.

12. Verfahren zur Herstellung von Organosiliciumverbindungen nach einem der Ansprüche 1 bis 11, wobei Komponente (d) 0,01 bis 20 Gew.-%, relativ zum Gesamtgewicht der Komponenten (a) und (b), ausmacht.

13. Verfahren zur Herstellung von Organosiliciumverbindungen nach einem der Ansprüche 1 bis 12, wobei Komponente (d) 0,05 bis 10 Gew.-%, relativ zum Gesamtgewicht der Komponenten (a) und (b), ausmacht.

14. Verfahren zur Herstellung von Organosiliciumverbindungen nach einem der Ansprüche 1 bis 13, wobei Komponente (d) ein in situ gebildeter Hilfskatalysator ist, der aus einer Metallsalzverbindung gebildet wird.

## Revendications

1. Procédé de préparation d'un composé d'organosilicium, lequel consiste à effectuer une réaction d'hydrosilylation entre (a) des composés insaturés avec des groupes terminaux insaturés et (b) des composés de type silane décrits par la formule HSiR⁰ₘW₃₋ₘ, dans laquelle W est choisi parmi des groupes alcoxy en C₁-C₆, des groupes aryloxy en C₆-C₁₀, et des atomes d'halogène, R⁰ représente un groupe organique, et m vaut 0, 1 ou 2 en présence (c) d'un catalyseur au platine et (d) d'un catalyseur auxiliaire choisi parmi (1) des esters de silyle d'acides dérivés d'oxo acides de soufre ; (2) des composés amide ayant des liaisons N-Si ; (3) des composés urée ; (4) des esters de silyle d'acide carbamique ; (5) des composés acide phosphorique ; et (6) des composés cycliques décrits par les formules suivantes choisis dans le groupe constitué par (i) des composés hydroxypyridine, (ii) des composés 8-hydroxyquinoléine, (iii) des composés oxazolidinone, et (iv) des composés N-hydroxysuccinimide : 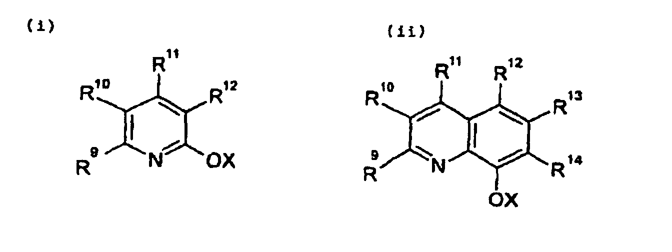 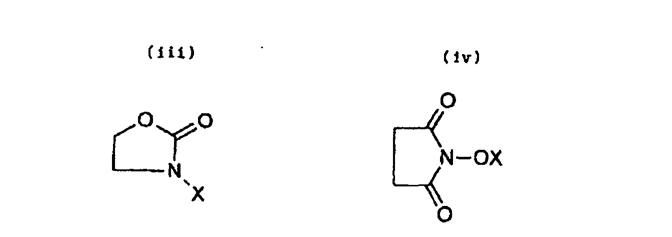 dans lesquelles R⁹, R¹⁰, R¹¹, R¹², R¹³, et R¹⁴ sont chacun choisis indépendamment parmi les atomes d'hydrogène, les atomes d'halogène, les groupes alkyle en C₁-C₁₀, les groupes aryle en C₆-C₁₀, les groupes alcoxy en C₁-C₁₀, et les groupes décrits par la formule R²₃Si-, dans laquelle chaque R² est choisi indépendamment parmi les groupes hydrocarbonés en C₁-C₁₀, les groupes alcoxy en C₁-C₁₀, les atomes de chlore, et les atomes d'hydrogène avec un maximum de deux atomes d'hydrogène présents ; et X représente un atome d'hydrogène ou un groupe décrit par la formule R²₃Si-, dans laquelle R² est le même que décrit ci-dessus.

2. Procédé de préparation de composés d'organosilicium selon la revendication 1, dans lequel les composés catalyseurs auxiliaires (d)(1) à (d)(5) sont décrits par les formules générales,
(d)(1) : R¹S (=O)₂OSiR²¹₃, dans laquelle R¹ est choisi parmi les groupes alkyle en C₁-C₁₀, les groupes aryle en C₆-C₁₈, les groupes décrits par la formule R¹⁸₂N-, dans laquelle chaque R¹⁸ est choisi indépendamment parmi les groupes alkyle en C₁-C₁₀, les groupes aryle en C₆-C₁₈, l'atome d'hydrogène avec un maximum d'un atome d'hydrogène présent, les groupes halogénoalkyle en C₁-C₁₀, les groupes halogénoaryle en C₆-C₁₈, les atomes d'halogène, les groupes alcoxy en C₁-C₁₀, et les groupes siloxy décrits par la formule R³⁰₃SiO-, dans laquelle chaque R³⁰ est choisi indépendamment parmi les groupes alkyle en C₁-C₆ ; et chaque R²¹ est choisi indépendamment parmi les groupes hydrocarbonés en C₁-C₁₀, les groupes alcoxy en C₁-C₁₀, les atomes de chlore, les atomes d'hydrogène avec un maximum de deux atomes d'hydrogène présents, et R¹S(=O)₂O-, dans lequel R¹ est le même que décrit ci-dessus ;
(d)(2) : R³C(=O)NR⁴SiR²²₃, dans laquelle R³ est choisi parmi les groupes alkyle en C₁-C₁₀, les groupes aryle en C₆-C₁₈, les groupes halogénoalkyle en C₁-C₁₀, les groupes halogénoaryle en C₆-C₁₈ ; R⁴ représente un groupe hydrocarboné en C₁-C₁₀ ou un atome d'hydrogène ; et chaque R²² est choisi indépendamment parmi les groupes hydrocarbonés en C₁-C₁₀, les groupes alcoxy en C₁-C₁₀, les atomes de chlore, les atomes d'hydrogène avec un maximum de deux atomes d'hydrogène présents, et R³C(=O)NR⁴-, dans lequel R³ et R⁴ sont les mêmes que ci-dessus ;
(d)(3) : R⁵R⁶NC(=O)NR⁴X¹, dans laquelle R⁵ et R⁶ sont chacun choisis indépendamment parmi les atomes d'hydrogène, les groupes alkyle en C₁-C₁₀, les groupes aryle en C₆-C₁₈, les groupes halogénoalkyle en C₁-C₁₀, les groupes halogénoaryle en C₆-C₁₈, et les groupes silyle décrit par R₃Si-, dans laquelle chaque R est choisi indépendamment parmi un groupe alkyle en C₁-C₃ ou un atome d'hydrogène avec un maximum de deux atomes d'hydrogène présents, R⁴ est le même que décrit ci-dessus ; X¹ est choisi dans le groupe constitué par R²³'₃Si- et les atomes d'hydrogène, où chaque R²³ est choisi indépendamment parmi les groupes hydrocarbonés en C₁-C₁₀, les groupes alcoxy en C₁-C₁₀, les atomes de chlore, les atomes d'hydrogène avec un maximum de deux atomes d'hydrogène présents, et R⁵R⁶NC(=O)-, dans lequel R⁵ et R⁶ sont les mêmes que décrit ci-dessus ;
(d)(4) : R⁷R⁸NC(=O)OSiR²⁴₃, dans laquelle R⁷ et R⁸ sont chacun choisis indépendamment parmi les groupes alkyle en C₁-C₁₀, les groupes aryle en C₆-C₁₈, et les atomes d'hydrogène avec un maximum d'un atome d'hydrogène présent ; et chaque R²⁴ est choisi indépendamment parmi les groupes hydrocarbonés en C₁-C₁₀, les groupes alcoxy en C₁-C₁₀, les atomes de chlore, les atomes d'hydrogène avec un maximum de deux atomes d'hydrogène présents, et R⁷R⁸NC(=O)-, dans lequel R⁷ et R⁸ sont les mêmes que décrit ci-dessus ;
(d)(5) : (R¹⁶O)₃P(=O) , dans laquelle chaque R¹⁶ est choisi indépendamment parmi les atomes d'hydrogène avec un maximum de deux atomes d'hydrogène présents, les groupes alkyle en C₁-C₁₀, les groupes aryle en C₆-C₁₈, les groupes halogénoalkyle en C₁-C₁₀, les groupes halogénoaryle en C₆-C₁₈, et un maximum de deux groupes silyle représentés par R²⁵₃Si-, dans laquelle chaque R²⁵ est choisi indépendamment parmi les groupes hydrocarbonés en C₁-C₁₀, les groupes alcoxy en C₁-C₁₀, les atomes de chlore, les atomes d'hydrogène avec un maximum de deux atomes d'hydrogène présents, et (R¹⁵O)₂P(=O)O-, dans laquelle chaque R¹⁵ est choisi indépendamment parmi les atomes d'hydrogène avec un maximum de deux atomes d'hydrogène présents, les groupes alkyle en C₁-C₁₀, les groupes aryle en C₆-C₁₈, les groupes halogénoalkyle en C₁-C₁₀, et les groupes halogénoaryle en C₆-C₁₈.

3. Procédé de préparation de composés d'organosilicium selon la revendication 1 ou 2, dans lequel le composant (d) est un catalyseur auxiliaire formé in situ.

4. Procédé de préparation de composés d'organosilicium selon l'une quelconque des revendications 1 à 3, dans lequel le composant (a) est choisi parmi le styrène ou un dérivé du styrène et les composés allyliques.

5. Procédé de préparation de composés d'organosilicium selon l'une quelconque des revendications 1 à 4, dans lequel le composant (b) est choisi parmi le triméthoxysilane, le méthyldiméthoxysilane, le diméthylméthoxysilane, le triéthoxysilane, le méthyldiéthoxysilane, le diméthyléthoxysilane, le diméthylchlorosilane, le méthyldichlorosilane, et le trichlorosilane.

6. Procédé de préparation de composés d'organosilicium selon l'une quelconque des revendications 1 à 5, dans lequel (d)(1) est choisi parmi des esters de silyle d'acides alkylsulfonique et des esters de silyle d'acides arylsulfonique.

7. Procédé de préparation de composés d'organosilicium selon l'une quelconque des revendications 1 à 5, dans lequel (d)(2) est choisi parmi des N-dialkylsilylacétamides et des N-dialkylsilyl-N-alkylacétamides.

8. Procédé de préparation de composés d'organosilicium selon l'une quelconque des revendications 1 à 5, dans lequel (d)(3) est choisi parmi l'urée et les N,N'-bis(trialkylsilyl)urées.

9. Procédé de préparation de composés d'organosilicium selon l'une quelconque des revendications 1 à 5, dans lequel (d) (4) est un trialkylsilyl-N,N-dialkylcarbamate.

10. Procédé de préparation de composés d'organosilicium selon l'une quelconque des revendications 1 à 5, dans lequel (d)(5) est un phosphate de trialkyle.

11. Procédé de préparation de composés d'organosilicium selon l'une quelconque des revendications 1 à 5, dans lequel (d)(6) est choisi parmi la 2-hydroxypyridine, la 8-hydroxyquinoléine, l'oxazolidinone, la 3-triméthylsilyl-2-oxazolidinone, et le N-hydroxysuccinimide.

12. Procédé de préparation de composés d'organosilicium selon l'une quelconque des revendications 1 à 11, dans lequel le composant (d) comprend de 0,01 à 20 % en poids, par rapport au poids total des composants (a) et (b).

13. Procédé de préparation de composés d'organosilicium selon l'une quelconque des revendications 1 à 12, dans lequel le composant (d) comprend de 0,05 à 10 % en poids, par rapport au poids total des composants (a) et (b).

14. Procédé de préparation de composés d'organosilicium selon l'une quelconque des revendications 1 à 13, dans lequel le composant (d) est un catalyseur auxiliaire formé *in situ* formé à partir d'un composé de type sel métallique.
